# EUROPEAN PATENT SPECIFICATION

(11) **EP 3 722 853 B1**
(45) Date of publication and mention of the grant of the patent: **29.03.2023**
(21) Application number: 20168656.5
(22) Date of filing: 08.04.2020
(51) Int. Cl.: G02B 6/44, H01B 7/22, H01B 9/00, H01B 17/52

(54) **OVERHEAD POWER LINE MADE TO PREVENT SNOW SLEEVES ACCRETION**
ÜBERLANDLEITUNG ZUR VERHINDERUNG EINER SCHNEEANSAMMLUNG IN FORM VON HÜLLEN
LIGNE DE PUISSANCE AÉRIENNE CONÇUE POUR PRÉVENIR L'ACCUMULATION DE NEIGE SOUS FORME DE GAINES

(30) Priority: 12.04.2019 IT 201900005642
(43) Date of publication of application: 14.10.2020
(73) Proprietor: Tratos Cavi S.p.A., 52036 Pieve S. Stefano AR (IT)
(72) Inventor: GIORGETTI, Jacopo, 52037 Sansepolcro (AR) (IT); POSATI, Alfonso, 00182 Roma (IT)
(74) Representative: Ripamonti, Enrico

(56) References cited:
- EP-A1- 2 669 900
- JP-A- H0 644 825
- JP-A- H06 111 630
- JP-A- 2000 268 637
- JP-A- 2016 136 467
- US-A1- 2015 194 240

## Description

The present invention is related to a cable for an overhead power line according to the preamble of the main claim.

As is known, an overhead power line comprises a plurality of cables supported by supports such as pylons or poles fixed to the ground. In the present text, the term "cable" is used to indicate both an electrical energy conductor cable with a conductive jacket and a ground cable, both fixed in a known manner to said supports (pylons and poles). However, the invention mainly regards the ground cable.

As known, ground cables are generally cables made of galvanised steel, aluminium-coated steel, aluminium or alloys thereof, which are stretched over the power conductors (bare or with conductive jacket) in the high-voltage overhead lines.

Such ground cables have two functions: to act as "lightning arrestor" to prevent lightning from striking the power conductors, and to have a function of connecting the earth wires of all the supports with the aim of contributing toward discharging both the overvoltages of atmospheric origin (lightning) as well as of the possible failure currents that can be determined for a discharge between conductors and supports to the ground.

The ground cables are designed to withstand particular, severe weather conditions: in particular to withstand winds of particular intensity and also to resist the possible accretion of ice on the cables.

As a matter of fact, when the overhead power lines are arranged in areas where, in particular periods of the year, the temperatures fall below zero and where snow falls, it is known that the accretion of snow on said cables and in particular on the ground cables can cause many problems. This accretion occurs in the form of a snow sleeve which is created on said ground cables (but also on the conductors) and which tends to project eccentrically from the overhead cable. One of the mechanisms that are activated, but however it is not the only one, lies in that due to the force of gravity, such sleeve tends to rotate (taking an eccentric shape on the cable) thus causing the rotation of the cable on which it is present. As the cable rotates it accretes more and more snow and therefore progressively increasing the overload. The cable, which is held at the ends thereof in a fixed manner by the supports, could thus break due to the generated overload.

Therefore, the accretion of snow on the cables of the overhead power lines could lead to the line falling or to the interruption of the transfer of the electrical energy.

The aforementioned problem can be mainly observed on ground cables specifically due to their embodiment, but it can also somewhat be deemed applicable to conductor cables, above all with a conductive jacket. However, this problem is also very important in the light of the fact that, considering the technological development and when of interest to the operator, the ground cables of the type indicated above were replaced with ground cables incorporating optical fibres for transferring data and/or for telephone lines.

Precisely for this further use of ground cables in the telecommunications industry, greater attention has been paid to the accretion of snow on such cables. This led to the creation, even at international level, of working groups aimed at seeking solutions to this problem which, therefore, prevent or limit the accretion of snow sleeves (and therefore ice sleeves) on said cables, and in particular on the ground cables.

For example, one of the aforementioned solutions provides for the use of one or more counterweights constrained to a ground cable; each counterweight increases the torsional rigidity of the cable by limiting its rotation around the longitudinal axis thereof and limiting the accretion of the sleeve. As a matter of fact, limiting the rotation of the conductor (or cable) prevents the creation of the mechanism that creates an accretion of snow with an enlargement.

The counterweights limit the rotation of the conductor within a predefined angle (usually 15 degrees) using a suitable mass and geometry. In the state of equilibrium, the snow overload on the cable is balanced by the mechanical torque of the counterweight.

Despite being effective, such known solution requires the installation of the counterweights along each overhead power line which can be subject to the problems of the aforementioned accretion of snow.

This installation must be carried out accurately and also as a function of the distance between the supports, given that the application of a concentrated mass on the conductor changes the frequency of some modes of vibration thereof as a function of the specific possible position of the mass and this change must be carefully designed so as to avoid compromising the soundness of the conductor.

In addition, there are costs and difficulties arising from applying counterweights along overhead power lines which are hundreds of kilometres long and located in areas that are difficult to reach.

EP2669900 regards an electrical conductor for the transmission of electrical energy and comprising a plurality of filamentary members, for example conductor cables with circular or trapezoidal cross-section. This document addresses the problem regarding the "skin effect" generated in an electrical cable such as the aforementioned one, which in turn generates "crown effect" in the conductor cable.

While the aforementioned second effect appears as a luminous halo around the conductor, the skin effect causes - in the conductor cable (consisting of several wires with cross-section between 0.3 and 0.5 mm) - a greater circulation of the electrons in proximity of the outermost region of the conductor instead of the entire cross-section thereof hence increasing the resistance of the conductor. In the case of a cable consisting of several wires which are arranged side-by-side or braided, since these wires are at contact with each other, the skin effect appears as if the cable were a single cable of increased transversal dimensions.

This prior art describes that when at least one of the cables of the conductor is totally coated with a fluorinated polymer (such as PVF, PFA, PTFE or the like) the skin effect is limited to the cable and the overall skin effect on the conductor is reduced, thus also reducing the resistance thereof to be traversed by the electric current.

Furthermore, the coating with fluorinated polymer (with thicknesses between 10 and 35 microns) considerably increases the voltage value from which the generation of the corona discharge begins, hence reducing the power losses of the conductor.

EP2669900 also discloses that the fluorinated polymer is highly hydrophobic and therefore if all the outer wires of the cable are totally coated with fluorinated polymer on the outer surface thereof, this reduces the accumulation of snow and/or ice on the cable.

In the prior art it is also described that the single filamentous member or wire is completely coated with the polymer by spraying, dipping or impregnation. It is also provided for that in the conductor cable there be a combination of polymer-coated wires and uncoated wires, but this solution is clearly indicated as applicable in cases where the hydrophobic effect of the polymer is not important.

Therefore, the prior art only describes the total coating of one or more wires of the conductor cable, since this coating needs to be carried out in order to reduce the skin effect of this wire on the wire itself, insulating it from the adjacent ones. Furthermore, mentioning the effect of avoiding the accretion of ice on the cable is limited to the presence of fluorinated polymer only at the outermost wires with respect to the conductor cable. However, this solution leads to considerable costs for manufacturing a conducting cable like the one described by the prior art, given that all the outer conductor wires thereof must be coated with the fluorinated polymer and such wires must be precisely positioned to obtain the function of separating the ice and/or the snow from the cable.

In any case, the coating with the polymer has purposes mainly different from those of avoiding the accretion of ice on the cable. As a matter of fact, an alternation between coated wires and uncoated wires is envisaged only when the hydrophobic effect is not important.

JP2000268637 regards overhead lines for the distribution of electrical energy comprising a ground wire. This prior art addresses the problem of the accretions of snow on the cables of the aforementioned overhead lines and it mentions various prior art solutions with respect to the filing of the text in question suitable to solve this problem.

Described among the aforementioned solutions is the one which provides for the use of a fluororesin adhesive tape which is wound around the surface of the cable or a fluororesin film which is deposited on the cable. However, this solution is criticised by the Japanese text due to the fact that the use thereof on an overhead power line is subject to durability-related problems arising from environmental conditions, pollution and contamination that may affect the adhesion of the adhesive tape or film to the cable.

US20150194240 discloses a high voltage overhead conductor coated with a polymeric film suitable to reduce the temperature during the use of the conductor when transferring power, temperature which, if high, increases the electrical resistance of the conductor. This solution is specific to a cable to be traversed by electric current in a high voltage line and it mainly describes that such film winds the cable externally.

JP 2016 136467 relates to an improvement in components such as a twisted metal wire for an overhead electric wire line, and more particularly to an overhead electric wire line which is excellent in snow accretion prevention performance.

More particularly, to prevent the lowering of snow-adhesion preventing performance even in the case where the water repellent surface is damaged by the friction at the time of manufacturing and stringing, the surface of the metal wire and a jumper line or the like (which forms the overhead wire line) is provided with fine irregular rough surface. This rough surface is provided with a coating layer made of ethylene tetrafluoride resin of a low molecular weight, which is transformed to CF3 to the end thereof.

An object of the present invention is to provide a solution to the problem regarding the accretion of snow or a snow sleeve along sections of a cable, in particular a ground cable, of an overhead electric line that is simple to construct, durable over time and cost-effective.

In particular, an object of the invention is to provide a cable, in particular a ground cable, for an overhead power line which is made so as to prevent snow accretion thereon.

Another object is to provide a cable of the aforementioned type that is simple to manufacture and which does not require intervention after it has been installed in line.

These and other objects which shall be more apparent to the man skilled in the art are attained by a cable for overhead power line according to claim 1.

For a better understanding of the present invention, the following drawings are attached hereto purely by way of example, wherein:
- figure 1 is a cross-sectional view of a ground cable made according to the invention;

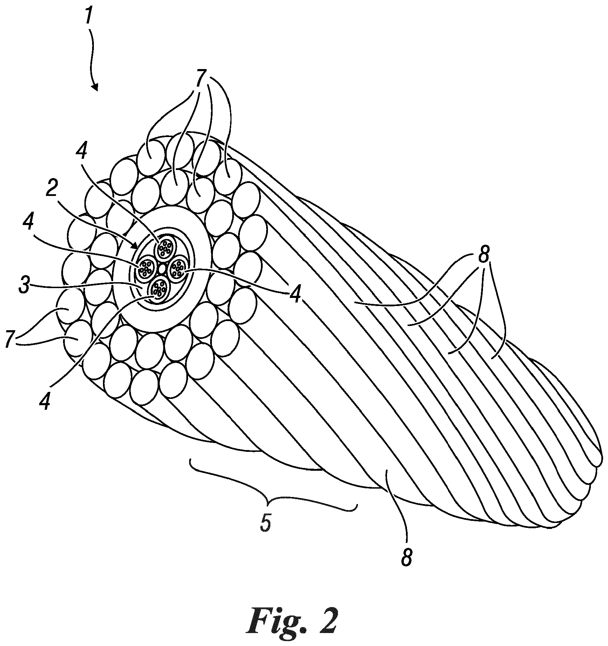

figure 2 shows a perspective view of a section of the ground cable of figure 1; and
figure 3 shows a cross-sectional view of a different embodiment of the invention.

With reference to the aforementioned figures, a ground cable is generally indicated with 1. It is suitable to be used in an overhead power line.

In a per se known manner, the ground cable comprises a hollow core 2 made of steel or aluminium or aluminium alloy. In the embodiment shown, by way of example, in the figures, present in the cavity 3 of such core are optical fibre cables 4, of a per se known type and used for telecommunications.

Around the core there is a usual outer crown 5 consisting of a plurality of conductive wires 7. In a known manner, these conductors can have a circular cross-section (as shown in the figures) or a trapezoidal cross-section (or "ashlar" cross-section). These wires 7 are made of steel, possibly plated with aluminium or zinc, aluminium or aluminium alloy.

According to the invention, at least part of said wires 7 of the outer crown 5 is partly covered with an "ice-phobic" material 8, i.e. with a material which does not allow the accretion of snow (and therefore ice) on the wire. Such material allows a possible ice sleeve which tends to form above the ground cable to slide over each wire 7 coated with said material.

The ground cable 1 can have all the conductor wires 7 of the outer crown 5 partially covered with ice-phobic material 8 or only a part of such wires provided with such coating: for example, wires partially coated with ice-phobic material alternate with wires not provided with said coating. Such inhomogeneity of the "coating" of the ground cable could increase the detachment of the snow sleeve without subjecting all the wires 7 to the process of coating with said material (saving costs while simultaneously having considerable benefits).

Obviously, the wire coated discretely along a plurality of sections thereof separated from each other by the ice-phobic material has the ends thereof free, preferably without such coating in order to have an optimum and usual capacity to connect electrically to the support to which such ends are connected.

In this manner, the function of the ground cable in the overhead power line is not affected, given that the ground cable maintains the electrical resistance thereof (as if it had no coated wires), electrical resistance sufficient to dissipate fault currents and currents generated therein by atmospheric overvoltages.

The material used for the coating 8 (at least partial) of at least part of the wires 7 is preferably a fluorinated polymer, such as PTFE or ETFE or the material known as Teflon. However, any of the following materials or families of materials can be used to coat the wire 7: PTFE, ETFE, FEP, PFA, PVDF, PVF, PCTFE, ECTFE, FFPM, FPM, FEPM, PFPE.

In other words, the coating material 8 must contain fluorine at at least a percentage comprised between 4% and 80% by weight, or other element, such as PTFE, ETFE, FEP, PFA, PVDF, PVF, PCTFE, ECTFE, FFPM, FPM, FEPM, PFPE at a percentage at least higher than 4% of polymer or fluorinated copolymers.

This material is deposited on a wire 7 by extrusion with a thickness of between 0.1 and 0.5 mm. Thanks to such procedure, provided for are a plurality of wires which are then wound or arranged, in known manner, on the core 2 of the wire 1 so as to obtain a finished product. Then, such ground cable thus obtained is deposited along an overhead power line with the usual methods of positioning the known and current ground cables, without subsequently having to intervene on it in order to associate one or more elements suitable to prevent the accretion of snow/ice sleeves on said cable.

It should be observed that the ground cables currently installed and obtained according to the knowledge of the state of the art can be replaced, for example during maintenance work on the power line, by ground cables obtained according to the present invention; this allows to render the overhead power line "ice-phobic" in a manner that is simple, durable over time and with installation costs similar to those for installation of a ground cable of the state of the art.

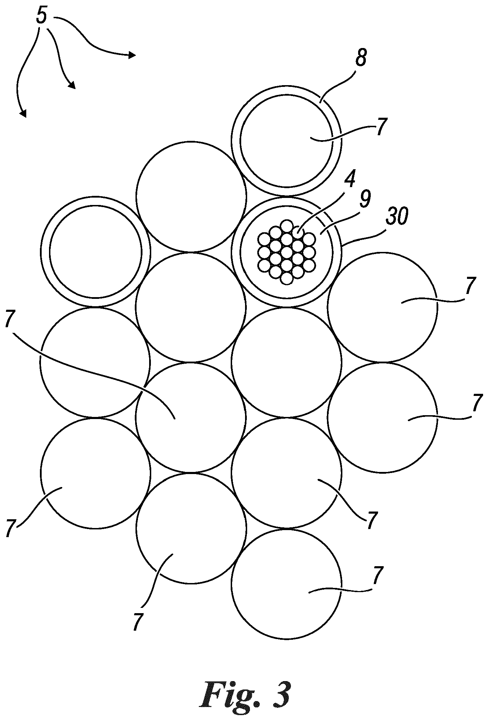

Figure 3 shows another embodiment of the invention where the core 2 comprises the optical fibre cables 4 which are housed in a stainless steel pipe 30 which is stranded together with the other conductor wires 7 made of steel or aluminium-coated steel, aluminium or aluminium alloys, which have a bearing function.

The pipe 30 can be partially coated with an ice-phobic material 8 of the mentioned type.

Figure 3 shows such type, according to which "stranded" around the steel (or aluminium-coated steel) pipe 30 are wires 7 which can have round or trapezoidal cross-section; one or more of said wires 7 are made of stainless steel and they are hollow and they can also contain optical fibre cables 9.

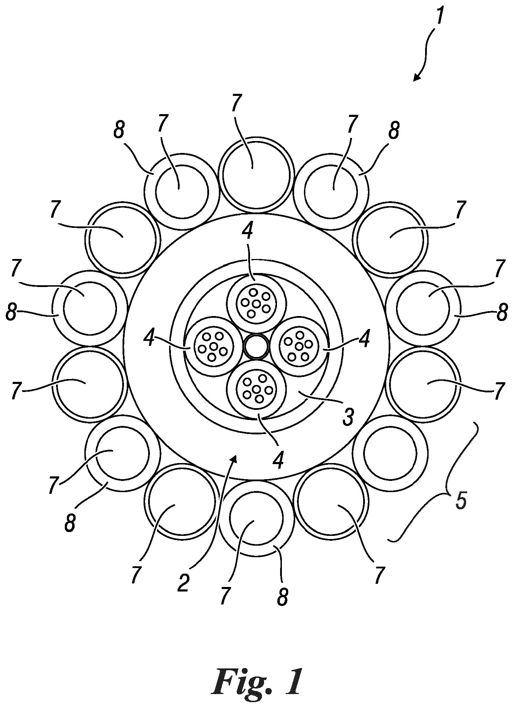

The outer ring 5, as already described regarding figure 1, has the wires (7) partly coated with ice-phobic material 8.

## Claims

1. Cable (1) for overhead power line used to transfer electrical energy, said cable comprising a core (2) and an outer crown (5), the latter being obtained by a plurality of metal wires (7), at least part of these metal wires (7) being partly covered with an outer coating made of material (8) suitable to facilitate the detachment of the snow which accretes on said cable (1), wherein each partly covered wire of said part of metal wires is discretely coated by said material along a plurality of sections of said wire separated from each other, **characterized in that** each coated section of the plurality of coated sections is fully coated with said material.

2. Cable for overhead power line according to claim 1, **characterised in that** it is a ground cable (1).

3. Cable for overhead power line according to claim 2, **characterised in that** the core (2) of said ground cable (1) is hollow (in 3) and it contains at least one optical fibre cable (4) .

4. Cable for overhead power line according to claim 3, **characterised in that** the optical fibre cable is contained in a metal pipe (30), said pipe (30) being provided with said outer coating made of material (8) suitable to facilitate the detachment of the snow which accretes on said pipe, said pipe (30) being at least partly surrounded by the metal wires (7), at least part of said metal wires having said outer coating.

5. Cable for overhead power line according to claim 4, **characterised in that** at least one of such metal wires (7) is hollow and it contains at least one optical fibre cable.

6. Cable for overhead power line according to claim 2, **characterised in that** each coated wire (7) of said ground cable (1) is not provided with an outer coating at the opposite ends thereof.

7. Cable for overhead power line according to claim 2, **characterised in that** said coated wire (7) alternatively has a circular or trapezoidal cross-section.

8. Cable for overhead power line according to claim 1, **characterised in that** it is a conductor cable.

9. Cable for overhead power line according to claim 1, **characterised in that** said material (8) suitable to facilitate the detachment of the snow contains a polymer or a fluorinated copolymer at a percentage higher than 4% by weight and preferably comprised between 4% and 80%.

10. Cable for overhead power line according to claim 9, **characterised in that** said polymer is a fluorinated polymer such as PTFE, ETFE, FEP, PFA, PVDF, PVF, PCTFE, ECTFE, FFPM, FPM, FEPM, PFPE.

11. Cable for overhead power line according to claim 9, **characterised in that** the thickness of such outer coating (8) of the wire is between 0.1 and 0.5 mm.

12. Cable for overhead power line according to claim 11, **characterised in that** the material (8) suitable to facilitate the detachment of the snow is an extruded material.

## Patentansprüche

1. Kabel (1) für eine Hochspannungsleitung, die zum Übertragen von elektrischer Energie verwendet wird, wobei das Kabel einen Kern (2) und einen äußeren Kranz (5) umfasst, wobei Letzterer durch mehrere Metalldrähte (7) erzielt wird, wobei zumindest ein Teil dieser Metalldrähte (7) teilweise mit einer Außenbeschichtung bedeckt ist, die aus einem Material (8) besteht, das geeignet ist, das Lösen des Schnees zu erleichtern, der an dem Kabel (1) anwächst, wobei jeder teilweise bedeckte Draht des Teils von Metalldrähten entlang mehrerer Abschnitte des Drahtes, die voneinander getrennt sind, mit dem Material diskret beschichtet ist, **dadurch gekennzeichnet, dass** jeder beschichtete Abschnitt der mehreren beschichteten Abschnitte vollständig mit dem Material beschichtet ist.

2. Kabel für eine Hochspannungsleitung nach Anspruch 1, **dadurch gekennzeichnet, dass** es ein Massekabel (1) ist.

3. Kabel für eine Hochspannungsleitung nach Anspruch 2, **dadurch gekennzeichnet, dass** der Kern (2) des Massekabels (1) hohl ist (in 3) und es mindestens ein Glasfaserkabel (4) enthält.

4. Kabel für eine Hochspannungsleitung nach Anspruch 3, **dadurch gekennzeichnet, dass** das Glasfaserkabel in einer Metallröhre (30) enthalten ist, wobei die Metallröhre (30) mit der Außenbeschichtung versehen ist, die aus einem Material (8) besteht, das geeignet ist, das Lösen des Schnees zu erleichtern, der an der Röhre anwächst, wobei die Röhre (30) zumindest teilweise von den Metalldrähten (7) umgeben ist, wobei zumindest ein Teil dieser Metalldrähte die Außenbeschichtung aufweist.

5. Kabel für eine Hochspannungsleitung nach Anspruch 4, **dadurch gekennzeichnet, dass** mindestens einer von derartigen Metalldrähten (7) hohl ist und mindestens ein Glasfaserkabel enthält.

6. Kabel für eine Hochspannungsleitung nach Anspruch 2, **dadurch gekennzeichnet, dass** jeder beschichtete Draht (7) des Massekabels (1) an seinen gegenüberliegenden Enden nicht mit einer Außenbeschichtung versehen ist.

7. Kabel für eine Hochspannungsleitung nach Anspruch 2, **dadurch gekennzeichnet, dass** der beschichtete Draht (7) alternativ einen kreis- oder trapezförmigen Querschnitt aufweist.

8. Kabel für eine Hochspannungsleitung nach Anspruch 1, **dadurch gekennzeichnet, dass** es ein Leiterkabel ist.

9. Kabel für eine Hochspannungsleitung nach Anspruch 1, **dadurch gekennzeichnet, dass** das Material (8), das geeignet ist, das Lösen des Schnees zu erleichtern, zu einem Prozentsatz von mehr als 4 Gew.-% und vorzugsweise zwischen 4 und 80 Gew.-% ein Polymer oder ein fluoriertes Copolymer enthält.

10. Kabel für eine Hochspannungsleitung nach Anspruch 9, **dadurch gekennzeichnet, dass** das Polymer ein fluoriertes Polymer ist, wie beispielsweise PTFE, ETFE, FEP, PFA, PVDF, PVF, PCTFE, ECTFE, FFPM, FPM, FEPM, PFPE.

11. Kabel für eine Hochspannungsleitung nach Anspruch 9, **dadurch gekennzeichnet, dass** die Dicke einer derartigen Außenbeschichtung (8) des Drahtes zwischen 0,1 und 0,5 mm liegt.

12. Kabel für eine Hochspannungsleitung nach Anspruch 11, **dadurch gekennzeichnet, dass** das Material (8), das geeignet ist, das Lösen des Schnees zu erleichtern, ein extrudiertes Material ist.

## Revendications

1. Câble (1) pour ligne électrique aérienne utilisé pour transférer de l'énergie électrique, ledit câble comprenant une âme (2) et une couronne extérieure (5), cette dernière étant obtenue par une pluralité de fils métalliques (7), au moins une partie de ces fils métalliques (7) étant partiellement couverte d'un revêtement extérieur fait d'un matériau (8) approprié pour faciliter le détachement de la neige qui s'accumule sur ledit câble (1), dans lequel chaque fil partiellement couvert de ladite partie de fils métalliques est discrètement revêtu par ledit matériau le long d'une pluralité de sections dudit fil séparées les unes des autres, **caractérisé en ce que** chaque section revêtue de la pluralité de sections revêtues est entièrement revêtue dudit matériau.

2. Câble pour ligne électrique aérienne selon la revendication 1, **caractérisé en ce qu'**il s'agit d'un câble de mise à la terre (1).

3. Câble pour ligne électrique aérienne selon la revendication 2, **caractérisé en ce que** l'âme (2) dudit câble de mise à la terre (1) est creuse (en 3) et qu'elle contient au moins un câble à fibre optique (4).

4. Câble pour ligne électrique aérienne selon la revendication 3, **caractérisé en ce que** le câble à fibres optiques est contenu dans un tube métallique (30), ledit tube (30) étant pourvu dudit revêtement extérieur en matériau (8) approprié pour faciliter le détachement de la neige qui s'accumule sur ledit tube, ledit tube (30) étant au moins partiellement entouré par les fils métalliques (7), au moins une partie desdits fils métalliques ayant ledit revêtement extérieur.

5. Câble pour ligne électrique aérienne selon la revendication 4, **caractérisé en ce qu'**au moins un de ces fils métalliques (7) est creux et qu'il contient au moins un câble à fibre optique.

6. Câble pour ligne électrique aérienne selon la revendication 2, **caractérisé en ce que** chaque fil revêtu (7) dudit câble de mise à la terre (1) n'est pas pourvu d'un revêtement extérieur à ses extrémités opposées.

7. Câble pour ligne électrique aérienne selon la revendication 2, **caractérisé en ce que** ledit fil revêtu (7) a alternativement une section transversale circulaire ou trapézoïdale.

8. Câble pour ligne électrique aérienne selon la revendication 1, **caractérisé en ce qu'**il s'agit d'un câble conducteur.

9. Câble pour ligne électrique aérienne selon la revendication 1, **caractérisé en ce que** ledit matériau (8) approprié pour faciliter le détachement de la neige contient un polymère ou un copolymère fluoré à un pourcentage supérieur à 4% en poids et de préférence compris entre 4% et 80%.

10. Câble pour ligne électrique aérienne selon la revendication 9, **caractérisé en ce que** ledit polymère est un polymère fluoré tel que PTFE, ETFE, FEP, PFA, PVDF, PVF, PCTFE, ECTFE, FFPM, FPM, FEPM, PFPE.

11. Câble pour ligne électrique aérienne selon la revendication 9, **caractérisé en ce que** l'épaisseur de ce revêtement extérieur (8) du câble est comprise entre 0,1 et 0,5 mm.

12. Câble pour ligne électrique aérienne selon la revendication 11, **caractérisé en ce que** le matériau (8) approprié pour faciliter le détachement de la neige est un matériau extrudé.
